# EUROPEAN PATENT SPECIFICATION

(11) **EP 3 179 175 B1**
(45) Date of publication and mention of the grant of the patent: **25.08.2021**
(21) Application number: 16197727.7
(22) Date of filing: 08.11.2016
(51) Int. Cl.: F24F 11/00, G05D 23/19

(54) **AIR CONDITIONER AND CONTROL METHOD THEREFOR**
KLIMAANLAGE UND STEUERUNGSVERFAHREN DAFÜR
CLIMATISEUR ET SON PROCÉDÉ DE COMMANDE

(30) Priority: 04.12.2015 KR 20150172071
(43) Date of publication of application: 14.06.2017
(73) Proprietor: LG Electronics Inc., Seoul 07336 (KR)
(72) Inventor: KIM, Jusu, 08592 Seoul (KR); LEE, Juyoun, 08592 Seoul (KR); PARK, Beungyong, 08592 Seoul (KR)
(74) Representative: Vossius & Partner Patentanwälte Rechtsanwälte mbB

(56) References cited:
- EP-A1- 1 691 141
- EP-A1- 2 865 959
- WO-A1-2008/066311
- WO-A1-2015/068277
- JP-A- H0 835 702
- JP-A- 2014 035 115
- KR-A- 20120 096 722

## Description

### TECHNICAL FIELD

The present disclosure relates to an air conditioner and a control method therefor.

### BACKGROUND

Air conditioners are electronic appliances for maintaining air in a predetermined space in the most suitable state according to uses and purposes. Generally, an air conditioner includes a compressor, a refrigerant, an expansion device, and an evaporator, and drives a refrigeration cycle in which compression, condensation, expansion, and evaporation processes of a refrigerant are performed to cool or heat the predetermined space.

The predetermined space may be variously proposed depending on a place where the air conditioner is to be used. As an example, when the air conditioner is arranged in a home or office, the predetermined space may be an indoor space of a house or building.

When the air conditioner performs an air cooling operation, an outdoor heat exchanger provided in an outdoor unit functions as a refrigerant and an indoor heat exchanger provided in an indoor unit functions as an evaporator. On the other hand, the air conditioner performs an air heating operation, the indoor heat exchanger functions as a refrigerant and the outdoor heat exchanger functions as an evaporator.

The air conditioner needs to operate according to appropriate operation manners so as to make a user feel comfortable, for example, not to hot or not too cold.

On the other hand, the air conditioner is one of electric appliances with relatively high power consumption. Recently, technology development has been conducted to improve operation efficiency of the air conditioner in order to reduce power consumption in the air conditioner.

As an example, there has been suggested a method of sensing whether a user is present in an indoor space in which an air conditioner is mounted and controlling the operation of the air conditioner based on a sensing result.

A related art document relating to the above-described control method is KR 10-2008-0132435.

According to the above related art, there is provided only technology to control cold air or hot air to be direct air flow or indirect air flow depending on whether a user is present/absent, or technology to calibrate an indoor space by calibrating a set air conditioning temperature. Furthermore, there is no description about a method of controlling the operation of an air conditioner based on a value of time during which the user is absent.

Actually, there may be a case where a plurality of users frequently come in and go out of an indoor space in which the plurality of users exist, for example, an office, a church, a meeting room, or an unmanned store, or even a case where a user is absent. However, even in this case, the air conditioner continuously operates under a predetermined condition, thus causing unnecessary energy consumption (spatial inefficient operation).

In addition, in a case where a user is absent for a relatively long time during a specific time period, for example, a lunch time, a break time, a school arriving or leaving time, or the like, unnecessary energy consumption may further increase (temporal inefficient operation).

KR 2012 0096722 (A) relates to an air conditioner and a method for controlling thereof to maintain the temperature of a room comfortably by detecting the number of people in a room, the moving distance and the moving pattern of people and changing a set temperature value and flow direction.

### SUMMARY

In order to solve the above-described problem, embodiments provide an air conditioner and a control method therefor, which can reduce energy consumption.

Furthermore, embodiments provide an air conditioner and a control method therefor, which can maintain a comfortable indoor space so as to allow a user to feel comfortable when entering an indoor space after the user has been absent for a while.

Furthermore, embodiments provide an air conditioner and a control method therefor, which perform a power saving operation while implementing a relatively comfort indoor space even when a user comes in and goes out of an indoor space at irregular time intervals.

The invention is specified in the claims, in particular in the control method claim 1 and in air conditioner claim 11.

In an embodiment, a control method for an air conditioner includes: determining a user set temperature and performing an air cooling operation or an air heating operation in an indoor space; determining whether a user is present in the indoor space; when it is determined that a user is absent, counting an elapsed time; and when the elapsed time reaches a set time, performing a predetermined operation mode.

The predetermined operation mode may include a comfort power saving mode, and the comfort power saving mode may include an operation controlled according to a set comfort temperature determined such that a predicted mean vote (PMV) determined based on temperature, humidity, air speed, mean radiant temperature, clothing insulation, and metabolic rate is maintained in a preset range.

The performing of the comfort power saving operation may include increasing a power saving level of the comfort power saving operation in a stepwise manner as time elapses.

The increasing of the power saving level may include determining the set comfort temperature to increase in a stepwise manner as time elapses when the air conditioner performs the air cooling operation.

The increasing of the power saving level may include determining the set comfort temperature to decrease in a stepwise manner as time elapses when the air conditioner performs the air heating operation.

The performing of the comfort power saving mode may include changing the set comfort temperature as a first step when a first set time has elapsed and changing the set comfort temperature as a second step when a second set time has elapsed from a time point when the first set time has elapsed.

The second set time may be shorter than the first set time.

The performing of the comfort power saving mode may include turning off the air conditioner when a third set time has elapsed from a time point when the second set time has elapsed.

The third set time may be shorter than the second set time.

The set comfort temperature may be determined based on the user set temperature.

In a case where the air conditioner performs an air cooling operation, when the user set temperature is lower than a first temperature value (A), the set comfort temperature may be determined to be the first temperature value (A), and, in a case where the air conditioner performs the comfort power saving operation, the set comfort temperature may be changed to a second temperature value (B) higher than the first temperature value (A) as time elapses.

In a case where the air conditioner performs an air heating operation, when the user set temperature is higher than a third temperature value (C), the set comfort temperature may be determined to be the third temperature value (C), and, in a case where the air conditioner performs the comfort power saving operation, the set comfort temperature may be changed to a fourth temperature value (D) lower than the third temperature value (C) as time elapses.

The temperature and the mean radiant temperature may be determined by a temperature sensor, the humidity may be determined by a humidity sensor, and the air speed may be determined by the number of rotations of an indoor fan of the air conditioner.

The clothing insulation and the metabolic rate may be determined to be set values.

The set comfort temperature may include a predetermined temperature value such that an index value of the PMV has a value in a range from -1 to +1.

In another embodiment, an air conditioner includes: an indoor unit mounted in an indoor space and having a suction portion and a discharge portion; an input unit configured to allow input of a user set temperature of the indoor space; a human sensing unit provided in one side of the indoor unit to sense whether an occupant is present in the indoor space; a timer configured to count an elapsed time when it is sensed by the human sensing unit that the occupant is absent; and a control unit configured to determine a set comfort temperature having a different value from the user set temperature such that a predicted mean vote (PMV) is maintained in a set range when the elapsed time counted by the timer reaches a set time.

The air conditioner may further include a memory unit configured to store predetermined information about clothing insulation and metabolic rate from among factors determining the PMV.

The memory unit may further store reference image information capable of being compared with an image acquired by the human body sensing unit.

The air conditioner may further include, from among the factors determining the PMV, a temperature sensor configured to determine a temperature; a humidity sensor configured to determine a humidity; and an indoor fan of which the number of rotations is sensed to determine an air speed.

The control unit may control an operation of the air conditioner to increase a power saving level by changing the set comfort temperature in a stepwise manner as time elapses.

According to the embodiments, it is possible to sense whether a user is present in an indoor space and perform a power saving operation of an air conditioner according to a sensing result, thus preventing unnecessary energy consumption.

Also, since a range of the power saving operation is determined such that a comfort degree of the indoor space is maintained at a predetermined level, during the power saving operation of the air conditioner, it is possible to prevent the user from feeling uncomfortable when entering the indoor space.

Furthermore, it is possible to prevent unnecessary energy consumption due to the absence of the user for a long time by increasing a power saving level in a stepwise manner when the user is continuously absent. In particular, it is possible to prevent unnecessary energy consumption by reducing a time interval at which the power saving level is increased in a stepwise manner.

Also, when a set indoor temperature of the user is out of a range of a comfort degree of the indoor space, or the user is absent for a very long time, it is possible to prevent unnecessary energy consumption by turning off the power supply of the air conditioner.

In addition, since the comfort degree of the indoor space can be controlled by a predicted mean vote index, the comfort degree of the user can be efficiently maintained.

Furthermore, since the human body sensing unit, for example, a vision sensor or a pyroelectric infrared (PIR) sensor can be mounted in the indoor unit, it is possible to easily sense whether an object in the indoor space is a person or an object.

### BRIEF DESCRIPTION OF THE DRAWINGS

Figs. 1A to 1C are diagrams respectively showing control states of an air conditioner when a user is present in an indoor space, when a user is absent in an indoor space, and when a user is entering an indoor space after being absent.
Fig. 2 is a block diagram of a configuration of an air conditioner according to an embodiment.
Figs. 3 to 5 are flowcharts of a control method for an air conditioner, according to an embodiment.
Figs. 6A and 6B are graphs showing changes in temperature of an indoor space and PMV index in the air heating operation and the air cooling operation of an air conditioner.
Fig. 7 is a graph showing changes in PMV index and power consumption in the case of controlling the air cooling operation of an air conditioner according to an embodiment.

### DETAILED DESCRIPTION OF THE EMBODIMENTS

Hereinafter, specific embodiments will be described with reference to accompanying drawings. It will be understood that the description herein is not intended to limit the claims to the specific embodiments described.

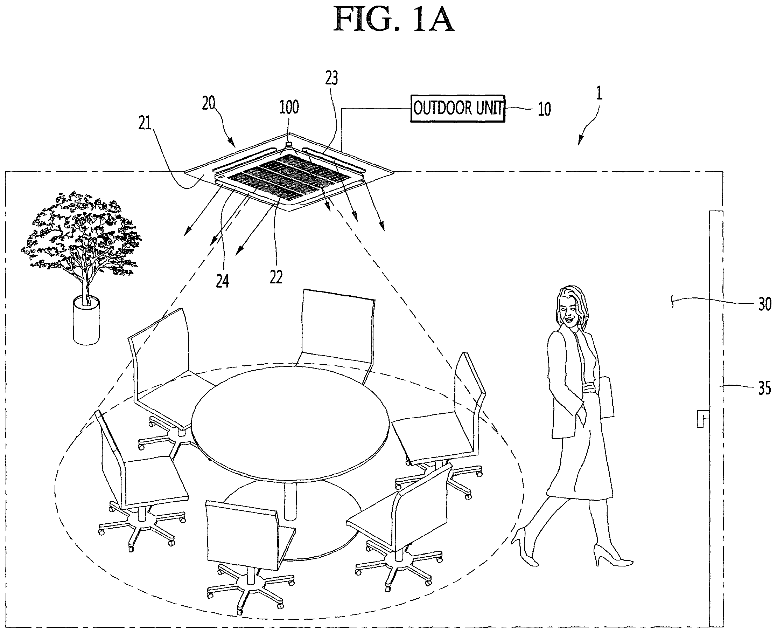

Figs. 1A to 1C are diagrams respectively showing control states of an air conditioner when a user is present in an indoor space, when a user is absent in an indoor space, and when a user is entering an indoor space after being absent.

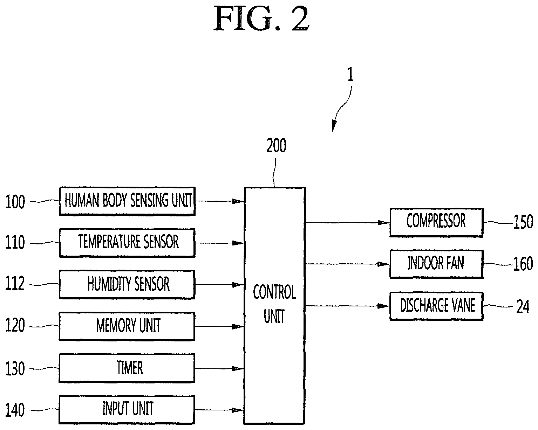

Referring to Figs. 1A to 1C, an indoor unit 20 may be mounted within an indoor space 30 where a user lives. The indoor unit 20 is an element of an air conditioner 1 and may be operatively connected to an outdoor unit 10. The outdoor unit 10 may be mounted outside the indoor space 30, for example, outside a building and includes a compressor 150 (see Fig. 2).

Although the indoor unit 20 is illustrated as a ceiling type indoor unit mounted in the ceiling, in Figs. 1A to 1C, the indoor unit 20 may be configured to be mounted in a wall (wall type indoor unit), or to stand on the floor (stand type indoor unit). The following description will be given by taking, as an example, a case in which the indoor unit 20 is a ceiling type indoor unit.

The indoor unit 20 includes a front panel 21 defining the bottom of the indoor unit 20, a suction portion 22 formed in the front panel 21 to suck air in the indoor space 30, and a discharge portion 23 through which air that is heat-exchanged is discharged.

An indoor heat exchanger and an indoor fan 160 (see Fig. 2) that generates an airflow may be mounted inside the indoor unit 20. Also, the indoor unit 20 further includes a discharge vane 24 movably provided in one side of the discharge portion 23 to adjust the volume of air discharged from the discharge portion 23. The discharge vane 24 may increase or decrease an opening degree of the discharge portion 23.

As an example, when the number of rotations of the indoor fan 160 is high or the opening degree of the discharge vane 24 is increased, the volume of air discharged from the indoor unit 20 may increase. On the other hand, when the number of rotations of the indoor fan 160 is low or the opening degree of the discharge vane 24 is decreased, the volume of air discharged from the indoor unit 20 may decrease.

The indoor unit 20 further includes a human body sensing unit 100 capable of sensing whether a user is present in the indoor space 30. As an example, the human body sensing unit 100 is mounted in the front panel 21 to be arranged toward the indoor space 30.

As an example, the human body sensing unit 100 may further include a vision sensor capable of sensing an image of a human body. The vision sensor is understood as a sensor capable of acquiring an image of a predetermined object existing in the indoor space 30. The image acquired by the vision sensor is compared with a previously-stored image and it may be determined whether the object is a human being.

As another example, the human body sensing unit 100 may further include a pyroelectric infrared (PIR) sensor capable of sensing a motion of a human body. The PIR sensor may sense a change in infrared rays emitted from a human body and the sensed information may be used to determine whether the user is present in the indoor space 30.

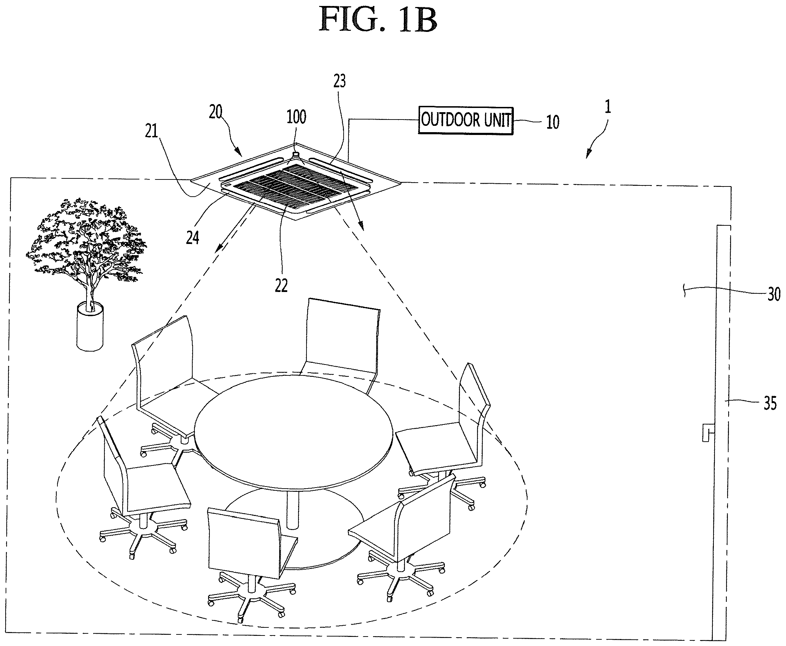

Fig. 1A illustrates a state in which the indoor unit 20 operates under operation conditions set by a user when the user is present in the indoor space 30. Fig. 1B illustrates a state where a pleasant power saving mode is performed when the user opens a door 35 and gets out of the indoor space 30.

The pleasant power saving mode is a mode performed when the user is absent in the indoor space, and may be understood as a mode performed under an operation condition for allowing a reduction in power consumption by making a comparison of operation conditions set by the user.

As an example, when the pleasant power saving mode is performed during the air cooling operation of the air conditioner 1, a set temperature of the indoor space 30 may be determined to be higher than a temperature set by the user. On the other hand, when the comfort power saving mode is performed during the air heating operation of the air conditioner 1, a set temperature of the indoor space 30 may be determined to be lower than a temperature set by the user.

It is noted that, although the power saving mode is performed, it may be necessary to keep the indoor space 30 comfortable for the comfort feeling of the user. A comfort operation of the air conditioner 1 according to the present embodiment may include a control operation using a Predicted Mean Vote (PMV) index.

The PMV refers to a predicted thermal comfort and is understood as an index of a thermal environment, which is determined to quantitatively express the effect of complex factors of the terminal environment on a human body and simply and exactly provide a range of a comfortable thermal environment.

Specifically, the PMV is an index obtained by theoretically predicting a human thermal comfort in such a way to measure an air temperature, a relative humidity, a radiant temperature, an air speed, clothing insulation, and metabolic rates, which are six factors of the thermal environment in a human being and an ambient environment, and substitute the measurements to a comfort equation based on heat balance of a human body.

The PMV may be calculated as a function of the six elements of the thermal environment. In order to perform the power saving mode of the air conditioner 1 and, at the same time, achieve implement the comfortable indoor space 30, control is performed to increase the values of other elements, rather than reduce a value of an element directly related to power consumption.

The PMV may be determined within a range of index values which are classified according to a seven point scale as shown in [Table 1] below.

**[Table 1]**

| | | | | | | | |
|---|---|---|---|---|---|---|---|
| PMV | +3 | +2 | +1 | 0 | -1 | -2 | -3 |
| Comfort degree | Hot | Warm | Slightly warm | Neutral | Slightly cool | Cool | Cold |

Specifically, as shown in [Table 1], as a PMV index value is close to +3, the thermal perception is "hot" and as a PMV index value is close to -3, the thermal perception is "cold". A range where a user can feel comfortable may be determined to be a range from +1 to -1. The air conditioner 1 according to the present embodiment may control the comfort degree of the indoor space 30 such that the PMV index value has a value from +1 to -1.

Also, a predicted percentage of dissatisfied (PPD) may be defined. The PPD represents the percentage of persons that will be dissatisfied with the current environment based on a seven point scale of the PMV. The PPD is a function of the PMV, and when the PMV is determined, may be determined to be a specific value.

As an example, when the PMV index value has a value between +1 and -1, the PPD may be expressed as a relatively low value, that is, a value at which most people feel comfortable. In the present embodiment, when it is recognized that the user is absent in the indoor space 30, the comfort power saving operation may be performed such that the PMV index value has a value between +1 and -1.

In the case of the air conditioner 1 according to the present embodiment, in order to simplify the control method, the clothing insulation and the metabolic rate of the six factors of the thermal environment may have predetermined reference values. On the other hand, the temperature, the humidity (relative humidity) and the mean radiant temperature may be determined respectively by measuring an indoor temperature and an indoor humidity. In this case, the temperature and the mean radiant temperature may be determined to be the same value. Furthermore, the air speed may be determined based on the rotation speed of the indoor fan 160.

In the case of Fig. 1B, when the user is absent from the indoor space 30, the set temperature of the indoor space 30 may be determined to be lower than the temperature set by the user. That is, the set temperature of the indoor space 30 may be determined to increase in the air cooling operation and decrease in the air heating operation. By performing the above determination, power consumption can be reduced.

The temperature and the relative humidity may be changed due to a change in the set temperature and therefore, the PMV index value may be changed. Although the PMV index value is changed, another factor, for example, the air speed may be controlled such that the index value does not get out of a comfort range.

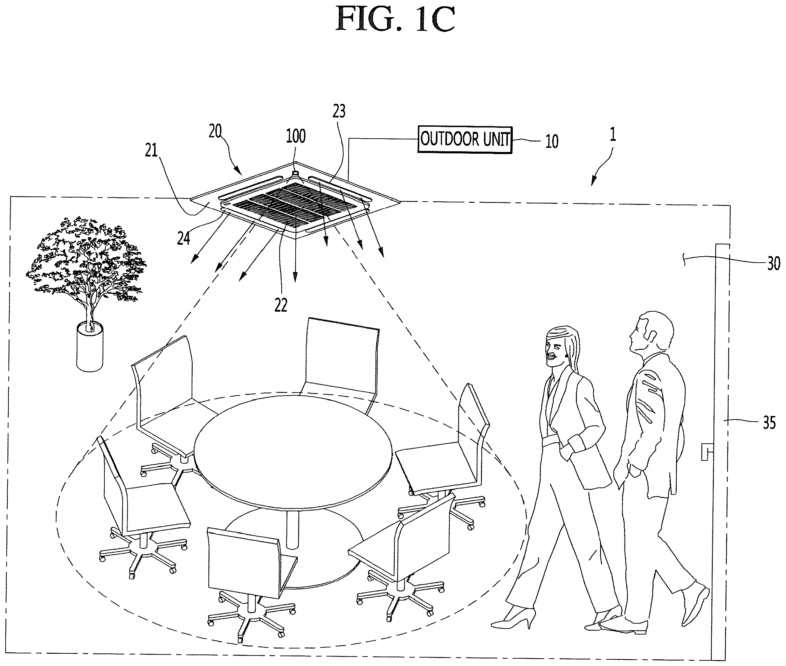

By performing the above control, the indoor space 30 may be maintained at the minimum comfort degree even when the user is absent in the indoor space 30. Therefore, when the user returns to the indoor space 30 after a predetermined time has elapsed as in Fig. 1C, the user may experience a relatively high comfort feeling.

FIG. 2 is a block diagram of a configuration of an air conditioner according to an embodiment.

Referring to Fig. 2, the air conditioner 1 according to an embodiment includes a human body sensing unit 100 configured to sense whether a user is present in an indoor space 30, and a temperature sensor 110 and a humidity sensor 112 configured to respectively sense a temperature and a humidity in the indoor space 30. As an example, the human body sensing unit 100, the temperature sensor 110, and the humidity sensor 112 may be provided in the indoor unit 20.

The air conditioner 1 may further include a memory unit 120 configured to store necessary information for operation of the air conditioner 1. Specifically, the memory unit 120 may store information about preset factor values, for example, preset reference values for the clothing insulation and the metabolic rates, in order to calculate the PMV.

The memory unit 120 may store reference image information which may be compared with image information recognized by the human body sensing unit 100. Specifically, the human body sensing unit 100 includes a vision sensor, an image sensed by the vision sensor is compared with information about a person image stored in the memory unit 120, and when the image is identical to the person image entirely or partly in a set ratio or more, it can be recognized that the user is present in the indoor space 30.

The air conditioner 1 further includes a timer 130 that measures elapsed time from the time point at which it is recognized that the user is absent in the indoor space 30 in order to perform a comfort power saving operation. The time counted by the timer 130 may be compared with predetermined first to third set times. A comparison result may be used as control information for operation of the air conditioner 1.

The air conditioner 1 further includes an input unit 140 configured to allow a user to input predetermined information for operation of the air conditioner 1. The input unit 140 includes a power input unit configured to turn on or off the power supply of the air conditioner 1 and a set temperature input unit configured to receive a set temperature of the indoor space 30.

The air conditioner 1 further includes a control unit 200 electrically connected to the human body sensing unit 100, the temperature sensor 110, the humidity sensor 112, the memory unit 120, the timer 130, and the input unit 140 to control operations of the compressor 150, the indoor fan 160, and the discharge vane 24, based on information recognized from the components.

Specifically, the control unit 200 may control an operating frequency or duty rate of the compressor 150 based on a set temperature inputted from the input unit 140 or a set temperature separately determined in a comfort power saving operation.

As an example, when a temperature difference value between the set temperature and the current temperature of the indoor space 30 is large, it is possible to increase the operating frequency or duty rate of the compressor 150. On the other hand, when a temperature difference value between the set temperature and the current temperature of the indoor space 30 is small, it is possible to decrease the operating frequency or duty rate of the compressor 150.

The control unit 200 may control the number of rotations of the indoor fan 160 or the opening degree of the discharge vane 24, which enables control of the air speed of the six factors of the thermal environment, in order to control a PMV index value. In addition, the control unit 200 may calculates a value of the air speed based on information about the number of rotations of the indoor fan 160 or the opening degree of the discharge vane 24.

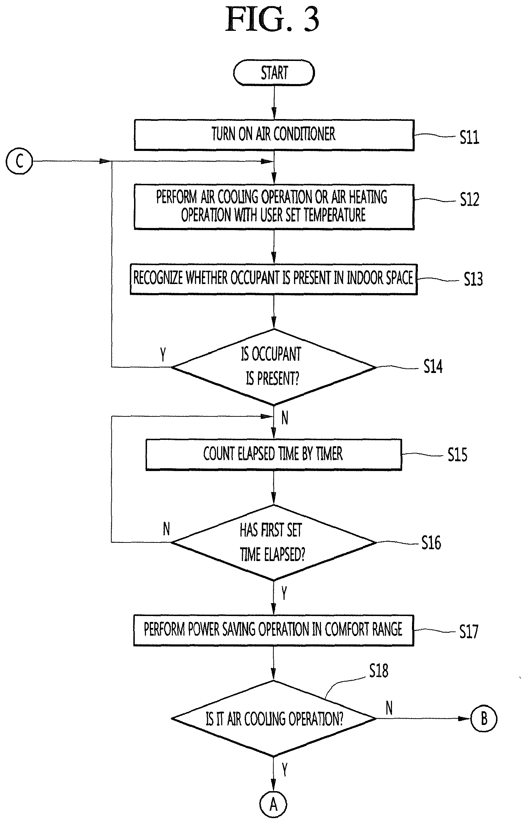

Figs. 3 to 5 are flowcharts of a method of controlling an air conditioner according to an embodiment. Referring to Figs. 3 to 5, there will be described a method of controlling an air conditioner according to an embodiment.

A user may turn on the power supply of the air conditioner 1 and input information about a set temperature of the indoor space 30 by manipulating the input unit 140. The set temperature inputted by the user is referred to as a "user set temperature". The air conditioner 1 may perform a cooling or air heating operation based on the user set temperature (S11 and S12).

It is recognized whether a user (occupant) is present in the indoor space 30 through the human body sensing unit 100 (S13). When it is recognized that the user is present in the indoor space 30, the operation of the air conditioner 1 may be controlled according to information set by the user, that is, the user set temperature.

On the other hand, when it is recognized that the user is absent in the indoor space 30, time elapsed therefrom may be counted by the timer 130. While the time is being counted, the operation of the air conditioner 1 may be controlled according to the user set temperature (S14 and S15).

Whether the counted time passes through a first set time is recognized (S16). The first set time is a period of time long enough to recognize that the user is absent in the indoor space 30 for a relatively long time and may be previously determined and be stored in the memory unit 120. As an example, the first set time may be 30 minutes (S16).

When the counted time passes through the first set time, a "comfort power saving operation" for reduction in power consumption is performed. The comfort power saving operation is understood as an operation for reducing power consumption while maintaining a predetermined range of a comfort degree in the indoor space 30 and increasing a power saving level in a stepwise manner as time elapses (S17).

When the comfort power saving operation is initiated, whether the operation mode of the air conditioner 1 is the air cooling operation or the air heating operation is determined (S18). When the operation mode of the air conditioner 1 is the air cooling operation, a set comfort temperature may be determined according to the "user set temperature" set by the user. The set comfort temperature may be understood as another set temperature of the indoor space 30, which is a control reference for the comfort power saving operation. In other words, the set comfort temperature may be a predetermined temperature value in order for a required comfort degree of the indoor space 30, that is, the PMV index value to be in a range from -1 to +1 (S19).

Specifically, when the user set temperature is lower than a first temperature value A, the set comfort temperature is determined to be the first temperature value A. That is, the set comfort temperature is determined to be higher than the temperature set by the user. As an example, the first temperature value may be 26°C (S20 and S21).

In addition, an air volume in a comfort range, which is matched with the set comfort temperature A may be controlled (S22).

Due to the above control, the indoor space 30 may be controlled such that the required comfort degree, that is, the PMV index value is in the range from -1 to +1. The set comfort temperature A is understood as a factor that influences the temperature, humidity, and mean radiant temperature of the indoor space, and the air volume in the comfort range is understood as a factor that influences the air speed.

During control using the set comfort temperature A and the air volume in the comfort range, the temperature, humidity, and mean radiant temperature of the indoor space 30 and the air speed may be measured in real time. As described above, the clothing insulation and the metabolic rate of the six factors of the thermal environment may be previously determined to be set values.

The PMV index value may be monitored through the measured values and the set values and control is performed such that the PMV index value is in a set range (from -1 to +1). As an example, since a factor causing relatively large power consumption in the operation of the air conditioner 1 is a set temperature, the PMV index value may be controlled so as to be a required value by maintaining the set temperature at the first temperature value A and controlling the air speed through the control of the number of rotations of the indoor fan 160

In the process of controlling the comfort power saving operation, whether the second set time has elapsed is recognized. The second set time may be understood as a time counted from a time point when the first set time has elapsed. As an example, the second set time may be 20 minutes (S23).

When the second set time has elapsed, control may be performed to increase the power saving level of the comfort power saving operation. Specifically, it is possible to perform control to increase the comfort set temperature. That is, it is possible to increase the comfort power saving temperature from the first temperature value A to the second temperature value B. The second temperature value B is higher than the first temperature value A, and may be, for example, 28°C (S24 and S25).

In addition, an air volume in a comfort range, which is matched with the set comfort temperature B may be controlled (S26).

In the process of performing control, the PMV index value may be controlled to be in a required range (-1 to +1) and therefore, the minimum comfort degree of the indoor space 30 may be maintained. Furthermore, since the power saving level higher than the power saving level of the power saving operation performed in step S22 is maintained in step S21, power consumption may be reduced.

In the process of performing the control of steps S24 to S26, whether the third set time has elapsed is determined. The third set time may be understood as a time counted from a time point when the second set time has elapsed. As an example, the third set time may be 10 minutes (S27).

When the third set time has elapsed, it is determined that the user is absent for a long time, the operation of the air conditioner 1 may be turned off.

As the second set time may be determined to be shorter than the first set time, and the third set time may be may be determined to be shorter than the second set time. As a time for which the user is absent in the indoor space 30 increases, it is predicted that a possibility that the user does not enter the indoor space 30 for a while is high, and by advancing a time at which increasing the power saving level is performed, it is possible to prevent air conditioning from being performed unnecessarily excessively on the indoor space 30 in which the user is absent. Accordingly, power consumption can be reduced (S28).

On the other hand, when it is recognized that the second set time have not elapsed in step S23, it is determined whether the user (occupant) is present in the indoor space 30. When the user is absent, subsequent steps of step S21 are performed. When the user is present, subsequent steps of step S12 are performed (S29).

Furthermore, when it is recognized that the third set time have not elapsed in step S27, it is determined whether the user (occupant) is present in the indoor space 30. When the user is absent, subsequent steps of step S25 are performed. When the user is present, subsequent steps of step S12 are performed (S30).

On the other hand, when the user set temperature is equal to or higher than the first temperature value A is lower than the second temperature value B, the set comfort temperature is determined to be the second temperature value B.

That is, in steps S20 and S28, determining the set comfort temperature to be the second temperature value B is performed after the second set time has elapsed, whereas, in step S31, determining the set comfort temperature to be the second temperature value B is performed simultaneously with the initiation of the comfort power saving operation. The reason for this may be understood as a result of determination as to whether the comfort degree of the indoor space 30 is high or low depending on the preference of the user, that is, the user set temperature. That is, when the user set temperature is relatively low, the set comfort temperature is slowly increased, whereas, when the user set temperature is relatively high, the set comfort temperature is rapidly increased (S32).

In addition, an air volume in a comfort range, which is matched with the set comfort temperature B may be controlled. Due to the above control, the PMV index value may be maintained in a required range.

In the process of controlling the comfort power saving operation, whether the second set time has elapsed is recognized (S34). When the second set time has elapsed, it is determined whether the user (occupant) is present in the indoor space 30. When the user is absent, subsequent steps of step S32 are performed. When the user is present, subsequent steps of step S12 are performed (S35).

When the second set time has elapsed in step S34, the air conditioner is turned off (S37). That is, when the user does not return to the indoor space 30 even through the comfort power saving operation is performed for a predetermined time in a state in which the set comfort temperature is set to the second temperature value B that is relatively high, the comfort power saving operation is not further performed, and the air conditioner 1 is turned off, thus reducing power consumption.

On the other hand, when the user does not return to the indoor space 30 even through the second set time has elapsed, it may be considered to slightly increase the set comfort temperature and perform the comfort power saving operation. However, when the set comfort temperature is higher than the second temperature value B, it may be difficult to maintain the PMV index value in the required range (from -1 to +1). Accordingly, control is performed focusing on reduction in power consumption by turning off the air conditioner 1.

On the other hand, when the user set temperature is higher than the second temperature value B in step S31, the air conditioner 1 may be turned off without performing the comfort power saving operation. That is, in a case where the temperature of the indoor space 30 set by the user herself or himself is relatively high, when the set comfort temperature is determined to be equal to or higher than the user set temperature and operation is performed, maintaining the comfort degree of the indoor space 30 is limited. In this case, it is possible to turn off the air conditioner 1. Thereafter, although the user returns to the indoor space 30, the user may barely feel inconvenience with respect to the comfort degree in consideration of the user's preference (S36 and S37).

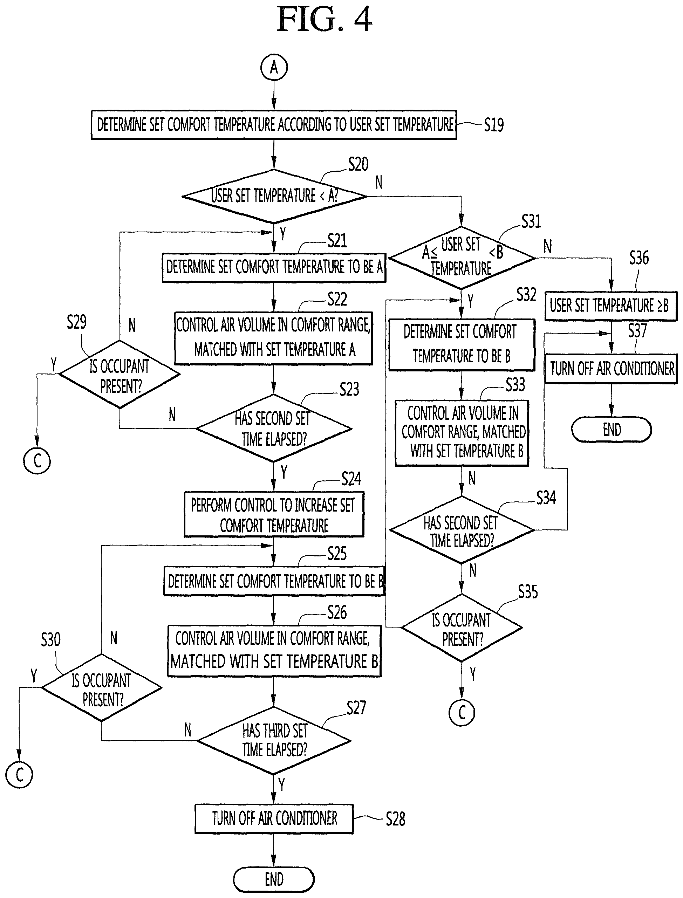

On the other hand, when it is determined that the air conditioner 1 performs an air heating operation in step S18, steps S40 to S59 are performed. Since content of the steps S40 to S59 is similar to content described in steps S19 to S37 in Fig. 4, the description given with reference to Fig. 4 is referred with respect to the common part. It is noted that the set comfort temperature is determined differently due to difference between the air cooling operation and the air heating operation.

When the operation mode of the air conditioner 1 is the air heating operation, a set comfort temperature may be determined according to the "user set temperate" set by the user. The set comfort temperature may be a predetermined temperature value in order to make it easy that a required comfort degree of the indoor space 30, that is, the PMV index value is in a range from -1 to +1 (S40).

Specifically, when the user set temperature is higher than a third temperature value C, the set comfort temperature is determined to be the third temperature value C. That is, the set comfort temperature is determined to be lower than the temperature set by the user. As an example, the third set temperature C may be 28°C (S41 and S42).

In addition, an air volume in a comfort range, which is matched with the set comfort temperature C may be controlled (S43).

Due to the above control, the indoor space 30 may be controlled such that the required comfort degree, that is, the PMV index value is in the range from -1 to +1. As an example, since a factor causing relatively large power consumption in the operation of the air conditioner 1 is a set temperature, the PMV index value may be controlled so as to be a required value by maintaining the set temperature at the third temperature value C and controlling the air speed through control of the number of rotations of the indoor fan 160.

In the process of controlling the comfort power saving operation, whether the second set time has elapsed is recognized. The second set time may be understood as a time counted from a time when the first set time has elapsed, and may be, for example, 20 minutes (S44).

When the second set time has elapsed, control may be performed to increase the power saving level of the comfort power saving operation. Specifically, it is possible to perform control to decrease the comfort set temperature. That is, it is possible to decrease the comfort power saving temperature from the third temperature value C to the fourth temperature value D. The fourth temperature value D is lower than the third temperature value C, and may be, for example, 26°C (S45 and S46) .

In addition, an air volume in a comfort range, which is matched with the set comfort temperature D may be controlled (S47).

In the process of performing control, the PMV index value may be controlled to be in a required range (-1 to +1) and therefore, the minimum comfort degree of the indoor space 30 may be maintained. Furthermore, since the power saving level higher than the power saving level of the power saving operation performed in step S43 is maintained in step S42, power consumption can be reduced.

In the process of performing the control of steps S45 to S47, whether the third set time has elapsed is determined. The third set time is a time counted from a time point when the second set time has elapsed, and may be, for example, 10 minutes (S48).

When the third set time has elapsed, it is determined that the user is absent for a long time, the operation of the air conditioner 1 may be turned off.

As described above, by advancing a time at which increasing the power saving level is performed in such a way that the second set time is determined to be shorter than the first set time and the third set time is determined to be shorter than the second set time, it is possible to prevent air conditioning from being performed unnecessarily excessively on the indoor space 30 in which the user is absent. Accordingly, power consumption can be reduced (S49).

On the other hand, when it is recognized that the second set time have not elapsed in step S44, it is determined whether the user (occupant) is present in the indoor space 30. When the user is absent, subsequent steps of step S42 are performed. When the user is present, subsequent steps of step S12 are performed (S50).

When it is recognized that the third set time have not elapsed in step S48, it is determined whether the user (occupant) is present in the indoor space 30. When the user is absent, subsequent steps of step S46 are performed. When the user is present, subsequent steps of step S12 are performed (S51) .

On the other hand, when the user set temperature is higher than the fourth temperature value D and lower than the third temperature value C in step S41, the set comfort temperature is determined to be the fourth temperature value D.

That is, in steps S41 and S49, determining the set comfort temperature to be the fourth temperature value D is performed after the second set time has elapsed, whereas, in step S42, determining the set comfort temperature to be the fourth temperature value D is performed simultaneously with the initiation of the comfort power saving operation The reason for this may be understood as a result of determination that the comfort degree of the indoor space 30 is determined as being high or low depending on the preference of the user, that is, the user set temperature.

In addition, an air volume in a comfort range, which is matched with the set comfort temperature D may be controlled. By performing control as described above, the PMV index value may be maintained in a required range (S54).

In the process of controlling the comfort power saving operation, whether the second set time has elapsed is recognized (S55). When the second set time have elapsed, it is determined whether the user (occupant) is present in the indoor space 30. When the user is absent, subsequent steps of step S53 are performed. When the user is present, subsequent steps of step S12 are performed (S56).

When the second set time has elapsed in step S55, the air conditioner is turned off (S58). That is, when the user does not enter the indoor space 30 even through the comfort power saving operation is performed for a predetermined time in a state in which the set comfort temperature is set to the fourth temperature value D which is relatively low, the comfort power saving operation is not performed anymore, and the air conditioner 1 is turned off, thus reducing power consumption.

On the other hand, when the user does not return to the indoor space 30 even through the second set time has elapsed, it may be considered to slightly decrease the set comfort temperature and perform the comfort power saving operation. However, when the set comfort temperature is lower than the fourth temperature value D, it may be difficult to maintain the PMV index value in the required range (from -1 to +1). Accordingly, control is performed focusing on reduction in power consumption by turning off the air conditioner 1.

On the other hand, when the user set temperature is lower than the fourth temperature value D in step S52, the air conditioner 1 may be turned off without performing the comfort power saving operation. That is, in a case where the temperature of the indoor space 30 set by the user herself or himself is relatively low, when the set comfort temperature is determined to be equal to or lower than the user set temperature and operation is performed, maintaining the comfort degree of the indoor space 30 is limited. In this case, it si possible to turn off the air conditioner 1. Thereafter, although the user returns to the indoor space 30, the user may barely feel inconvenience with respect to the comfort degree in consideration of the user's preference (S57 and S58).

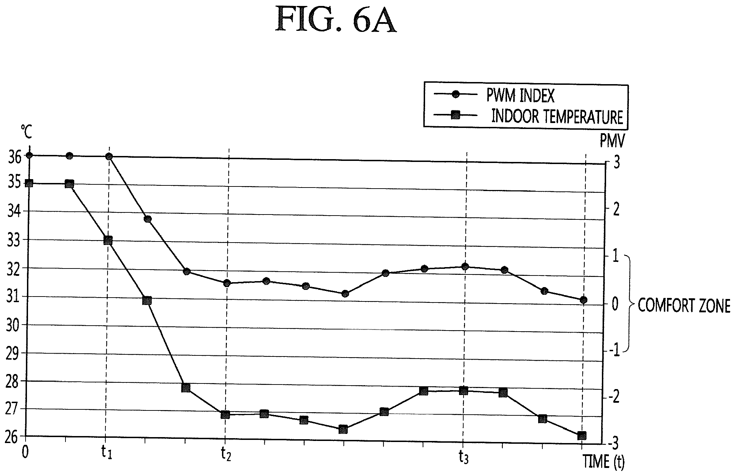

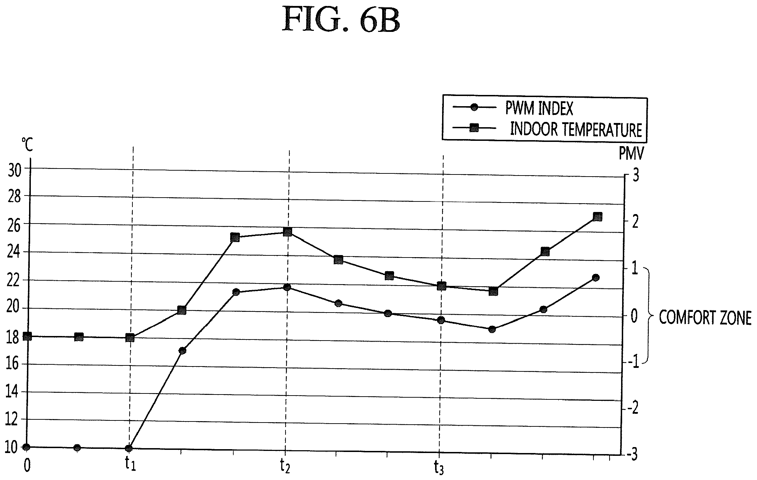

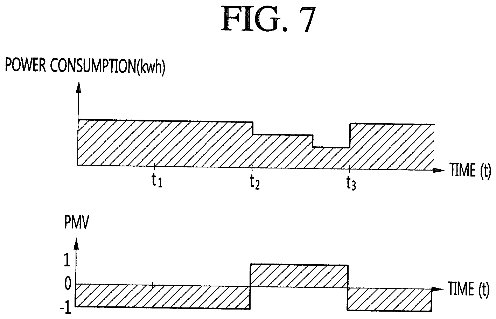

Figs. 6A and 6B are graphs showing changes in temperature of an indoor space and PMV index in the air heating operation and the air cooling operation of an air conditioner, and Fig. 7 is a graph showing changes in PMV index and power consumption in the case of controlling the operation of an air conditioner according to an embodiment.

Referring to Fig. 6A, when the operation of the air conditioner 1 is controlled according to the control method described with reference to Figs. 3 and 4, the PMV index value may be maintained in a required range, that is, a range of larger than -1 and smaller than +1 (hereinafter, referred to as a comfort zone).

Specifically, when the air cooling operation is initiated after the power supply of the air conditioner 1 is turned on, the indoor temperature gradually decreases based on the user set temperature and the PMV index value decreases toward the comfort zone.

It is sensed whether the user is present in the indoor space 30. At time t1, it may be sensed that the user is absent in the indoor space 30. A time is counted from a time point when it is sensed that the user is absent. When a first set time has elapsed, that is, at time t2, the comfort power saving operation may be performed. Therefore, the first set time, which is described with reference to Figs. 3 to 5, may be a value (t2-t1).

Time t3 means a time point when the user returns to the indoor space 30 and time t3-t2 means a time for which the comfort power saving operation is performed. Although the user returns to the indoor space 30 at the time t3, the PMV index value is in the range of the comfort zone, and therefore, the comfort degree of the indoor space 30 may be recognized as being fine. By performing control as described above, it is possible to maintain the comfort degree at a set level while reducing power consumption.

Specifically, referring to Fig. 7, when the comfort power saving operation is initiated at time t2, the PMV index value may be maintained in the range of the comfort zone (smaller than +1) in spite of increment in the PMV index value. Furthermore, it can be known that power consumption is reduced.

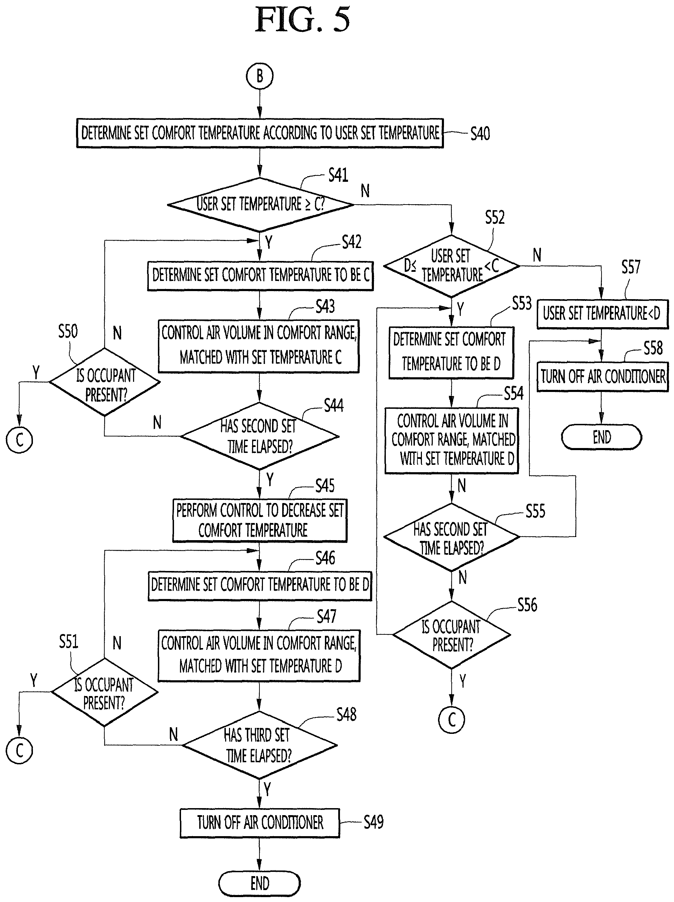

Referring to Fig. 6B, when the operation of the air conditioner 1 is controlled according to the control method described with reference to Figs. 3 and 5, the PMV index value may be maintained in a required range, that is, a range of larger than -1 and smaller than +1 (hereinafter, referred to as a comfort zone).

Specifically, when the air heating operation is initiated after the power supply of the air conditioner 1 is turned on, the indoor temperature gradually increases based on the user set temperature and the PMV index value increases toward the comfort zone.

It is sensed whether the user is present in the indoor space 30. At time t1, it may be sensed that the user is absent in the indoor space 30. Time is counted from a time point when it is sensed that the user is absent. When a first set time has elapsed, that is, at time t2, the comfort power saving operation may be performed.

Time t3 means the time when the user returns to the indoor space 30 and time t3-t2 means the time when the comfort power saving operation is performed. Although the user returns to the indoor space 30 at time t3, the PMV index value is in the range of the comfort zone, and therefore, the comfort degree of the indoor space 30 may be recognized as being fine. By performing control as described above, it is possible to maintain the comfort degree at a set level while reducing power consumption.

Although a separate graph is not illustrated as in Fig. 7, when the comfort power saving operation is initiated at time t2, the PMV index value may be maintained in the range of the comfort zone (larger than -1) in spite of increment in the PMV index value. Furthermore, it is possible to reduce power consumption.

## Claims

1. A control method for an air conditioner comprising:
determining (S12) a user set temperature and performing an air cooling operation or an air heating operation in an indoor space (30);
determining (S13) whether a user is present in the indoor space (30);
when it is determined that a user is absent, counting (S15) an elapsed time; and
when the elapsed time reaches a set time, performing (S17) a comfort power saving mode,
wherein the comfort power saving mode includes an operation controlled according to a set comfort temperature determined such that a predicted mean vote, PMV, determined based on temperature, humidity, air speed, mean radiant temperature, clothing insulation, and metabolic rate is maintained in a preset range,
**characterised in that** in the step of performing a comfort power saving mode, in a case where the air conditioner performs an air cooling operation, when the user set temperature is lower than a first temperature value (A), the set comfort temperature is determined (S20) to be the first temperature value (A),
when the user set temperature is higher than the first temperature value (A) and is lower than a second temperature value (B), the set comfort temperature is determined (S31) to be the second temperature value (B), and
when the user set temperature is higher than the second temperature value (B), the air conditioner is turned off (S36, S37).

2. The control method of claim 1, wherein, in a case where the air conditioner performs an air heating operation,
when the user set temperature is equal or higher than a third temperature value (C), the set comfort temperature is determined (S42) to be the third temperature value (C),
when the user set temperature is lower than the third temperature value (C) and is higher than a fourth temperature value (D), the set comfort temperature is determined (S52) to be the fourth temperature value (D), and
when the user set temperature is lower than the fourth temperature value (D), the air conditioner is turned off (S57, S58) .

3. The control method of claim 2, wherein the performing of the comfort power saving operation comprises increasing a power saving level of the comfort power saving operation in a stepwise manner as time elapses.

4. The control method of claim 3, wherein the increasing of the power saving level comprises determining (S24) the set comfort temperature to increase in a stepwise manner as time elapses when the air conditioner performs the air cooling operation.

5. The control method of claim 3, wherein the increasing of the power saving level comprises determining (S45) the set comfort temperature to decrease in a stepwise manner as time elapses when the air conditioner performs the air heating operation.

6. The control method of claim 3, wherein the performing of the comfort power saving mode comprises changing the set comfort temperature as a first step when a first set time has elapsed (S16) and changing the set comfort temperature as a second step when a second set time has elapsed (S23) from a time point when the first set time has elapsed, and
wherein the second set time is less than the first set time.

7. The control method of claim 6, wherein the performing of the comfort power saving mode comprises turning off (S28) the air conditioner when a third set time has elapsed (S27) from a time point in which the second set time has elapsed, and
wherein the third set time is less than the second set time.

8. The control method of claim 1, wherein the temperature and the mean radiant temperature are determined by a temperature sensor (110),
the humidity is determined by a humidity sensor (112), and
the air speed is determined by the number of rotations of an indoor fan (160) of the air conditioner.

9. The control method of claim 8, wherein the clothing insulation and the metabolic rate are determined to be set values.

10. The control method of claim 1, wherein the set comfort temperature includes a predetermined temperature value such that an index value of the PMV has a value in a range from -1 to +1.

11. An air conditioner comprising:
an indoor unit (20) mounted in an indoor space (30) and having a suction portion (22) and a discharge portion (23);
an input unit (140) configured to allow input of a user set temperature of the indoor space (30);
a human sensing unit (100) provided in one side of the indoor unit (20) to sense whether an occupant is present in the indoor space (30);
a timer (130) configured to count an elapsed time when it is sensed by the human sensing unit (100) that the occupant is absent; and
a control unit (200) configured to determine a set comfort temperature having a different value from the user set temperature such that a predicted mean vote, PMV, is maintained in a set range when the elapsed time counted by the timer reaches a set time,
**characterised in that**, in a case where the air conditioner performs an air cooling operation, the control unit (200) determines:
the set comfort temperature as a first temperature value (A) when the user set temperature is lower than the first temperature value (A),
the set comfort temperature as a second temperature value (B) when the user set temperature is higher than the first temperature value (A) and is lower than a second temperature value (B), and
to turn off the air conditioner when the user set temperature is higher than the second temperature value (B).

12. The air conditioner of claim 11, further comprising a memory unit (120) configured to store predetermined information about clothing insulation and metabolic rate from among factors determining the PMV, and
wherein the memory unit (120) further stores reference image information capable of being compared with an image acquired by the human body sensing unit (100).

13. The air conditioner of claim 11 or 12, further comprising:
a temperature sensor (110) configured to determine a temperature from among the factors determining the PMV;
a humidity sensor (112) configured to determine a humidity from among the factors determining the PMV; and
an indoor fan (160) of which the number of rotations is sensed to determine an air speed from among the factors determining the PMV, and
wherein the control unit (200) is configured to control an operation of the air conditioner to increase a power saving level by changing the set comfort temperature in a stepwise manner as time elapses.

## Patentansprüche

1. Steuerverfahren für eine Klimaanlage, das aufweist:
Feststellen (S12) einer von einem Benutzer eingestellten Temperatur und Durchführen eines Luftkühlungsbetriebs oder eines Lufterwärmungsbetriebs in einem Innenraum (30);
Feststellen (S13), ob ein Benutzer im Innenraum (30) anwesend ist;
wenn festgestellt wird, dass ein Benutzer abwesend ist, Zählen (S15) einer verstrichenen Zeit; und
wenn die verstrichene Zeit eine eingestellte Zeit erreicht, Durchführen (S17) eines Komfort- Energi esparmodus,
wobei der Komfort-Energiesparmodus einen Betrieb aufweist, der gemäß einer eingestellten Komforttemperatur gesteuert wird, die so festgelegt wird, dass eine vorhergesagtes Durchschnittsvotum, PMV, das beruhend auf der Temperatur, der Feuchtigkeit, der Luftgeschwindigkeit, der durchschnittlichen Strahlungstemperatur, der Kleidungsisolation und der Stoffwechselrate bestimmt wird, in einem voreingestellten Bereich gehalten wird,
**dadurch gekennzeichnet, dass** im Schritt des Durchführens eines Komfort-Energiesparmodus in einem Fall, in dem die Klimaanlage einen Luftkühlungsbetrieb durchführt,
wenn die vom Benutzer eingestellte Temperatur niedriger als ein erster Temperaturwert (A) ist, die eingestellte Komforttemperatur als der erste Temperaturwert (A) festgelegt wird (S20),
wenn die vom Benutzer eingestellte Temperatur höher ist als der erste Temperaturwert (A) und niedriger als ein zweiter Temperaturwert (B) ist, die eingestellte Komforttemperatur als der zweite Temperaturwert (B) festgelegt wird (S31), und
wenn die vom Benutzer eingestellte Temperatur höher als der zweite Temperaturwert (B) ist, die Klimaanlage ausgeschaltet wird (S36, S37).

2. Steuerverfahren nach Anspruch 1, wobei, in einem Fall, in dem die Klimaanlage einen Lufterwärmungsbetrieb durchführt,
wenn die vom Benutzer eingestellte Temperatur gleich oder höher als ein dritter Temperaturwert (C) ist, die eingestellte Komforttemperatur als der dritte Temperaturwert (C) festgelegt wird (S42),
wenn die vom Benutzer eingestellte Temperatur niedriger als der dritte Temperaturwert (C) und höher ist als ein vierter Temperaturwert (D) ist, die eingestellte Komforttemperatur (S52) als der vierte Temperaturwert (D) festgelegt wird, und
wenn die vom Benutzer eingestellte Temperatur niedriger als der vierte Temperaturwert (D) ist, die Klimaanlage ausgeschaltet wird (S57, S58).

3. Steuerverfahren nach Anspruch 2, wobei das Durchführen des Komfort-Energiesparbetriebs das Erhöhen eines Energiesparniveaus des Komfort-Energiesparbetriebs in einer stufenweisen Art im Laufe der Zeit aufweist.

4. Steuerverfahren nach Anspruch 3, wobei das Erhöhen eines Energiesparniveaus das Feststellen (S24) aufweist, die eingestellte Komforttemperatur in einer stufenweisen Art im Laufe der Zeit zu erhöhen, wenn die Klimaanlage den Luftkühlungsbetrieb durchführt.

5. Steuerverfahren nach Anspruch 3, wobei das Erhöhen eines Energiesparniveaus das Feststellen (S45) aufweist, die eingestellte Komforttemperatur in einer stufenweisen Art im Laufe der Zeit zu senken, wenn die Klimaanlage den Lufterwärmungsbetrieb durchführt.

6. Steuerverfahren nach Anspruch 3, wobei das Durchführen des Komfort-Energiesparmodus das Ändern der eingestellten Komforttemperatur als einen ersten Schritt, wenn eine erste eingestellte Zeit verstrichen ist (S16), und das Ändern der eingestellten Komforttemperatur als einen zweiten Schritt aufweist, wenn eine zweite eingestellte Zeit von einem Zeitpunkt verstrichen ist (S23), an dem die erste eingestellte Zeit verstrichen ist, und
wobei die zweite eingestellte Zeit kleiner als die erste eingestellte Zeit ist.

7. Steuerverfahren nach Anspruch 6, wobei das Durchführen des Komfort-Energiesparmodus das Ausschalten (S28) der Klimaanlage aufweist, wenn eine dritte eingestellte Zeit von einem Zeitpunkt verstrichenen ist (S27), an dem die zweite eingestellte Zeit verstrichen ist, und
wobei die dritte eingestellte Zeit kleiner als die zweite eingestellte Zeit ist.

8. Steuerverfahren nach Anspruch 1, wobei die Temperatur und die durchschnittliche Strahlungstemperatur durch einen Temperatursensor (110) festgestellt werden,
die Feuchtigkeit durch eine Feuchtigkeitssensor (112) festgestellt wird, und
die Luftgeschwindigkeit durch die Drehzahl eines Innenventilators (160) der Klimaanlage festgestellt wird.

9. Steuerverfahren nach Anspruch 8, wobei die Kleidungsisolation und die Stoffwechselrate als Vorgabewerte festgelegt sind.

10. Steuerverfahren nach Anspruch 1, wobei die eingestellte Komforttemperatur einen vorgegebenen Temperaturwert aufweist, so dass ein Indexwert des PMV einen Wert in einem Bereich von -1 bis +1 aufweist.

11. Klimaanlage mit:
einer Inneneinheit (20), die in einem Innenraum (30) angebracht ist und einen Ansaugabschnitt (22) und einen Ausstoßabschnitt (23) aufweist;
einer Eingabeeinheit (140), die konfiguriert ist, die Eingabe einer vom Benutzer eingestellten Temperatur des Innenraums (30) zu ermöglichen;
einer Menschenerfassungseinheit (100), die auf einer Seite der Inneneinheit (20) vorgesehen ist, um zu erfassen, ob ein Bewohner im Innenraum (30) anwesend ist;
einem Zeitgeber (130), der konfiguriert ist, eine verstrichenen Zeit zu zählen, wenn durch die Menschenerfassungseinheit (100) erfasst wird, dass der Bewohner abwesend ist; und
einer Steuereinheit (200), die konfiguriert ist, eine eingestellte Komforttemperatur festzustellen, die einen anderen Wert als die vom Benutzer eingestellte Temperatur aufweist,
so dass ein vorhergesagtes Durchschnittsvotum, PMV, in einem eingestellte Bereich gehalten wird, wenn die durch den Zeitgeber gezählte verstrichene Zeit eine eingestellte Zeit erreicht,
**dadurch gekennzeichnet, dass** in einem Fall, in dem die Klimaanlage einen Luftkühlungsbetrieb durchführt, die Steuereinheit (200) festlegt:
die eingestellte Komforttemperatur als einen ersten Temperaturwert (A), wenn die vom Benutzer eingestellte Temperatur niedriger als der erste Temperaturwert (A) ist,
die eingestellte Komforttemperatur als einen zweiten Temperaturwert (B), wenn die vom Benutzer eingestellte Temperatur höher als der erste Temperaturwert (A) ist und niedriger als ein zweiter Temperaturwert (B) ist, und
die Klimaanlage auszuschalten, wenn die vom Benutzer eingestellte Temperatur höher als der zweite Temperaturwert (B) ist.

12. Klimaanlage nach Anspruch 11, die ferner eine Speichereinheit (120) aufweist, die konfiguriert ist, vorgegebene Informationen über eine Kleidungsisolation und eine Stoffwechselrate unter den Faktoren zu speichern, die das PMV bestimmen, und
wobei die Speichereinheit (120) ferner Referenzbildinformationen speichert, die mit einem Bild verglichen werden können, das durch die Einheit (100) zur Erfassung eines menschlichen Körpers erfasst wird.

13. Klimaanlage nach Anspruch 11 oder 12, die ferner aufweist:
einen Temperatursensor (110), der konfiguriert ist, eine Temperatur unter den Faktoren festzustellen, die das PMV bestimmen;
einen Feuchtigkeitssensor (112), der konfiguriert ist, eine Feuchtigkeit unter den Faktoren festzustellen, die das PMV bestimmen; und
einen Innenventilator (160), dessen Drehzahl erfasst wird, um eine Luftgeschwindigkeit unter den Faktoren zu bestimmen, die das PMV bestimmen, und
wobei die Steuereinheit (200) konfiguriert ist, einen Betrieb der Klimaanlage zu steuern, ein Energiesparniveau durch Ändern der eingestellten Komforttemperatur in einer stufenweisen Art im Laufe der Zeit zu erhöhen.

## Revendications

1. Procédé de commande pour un climatiseur, comprenant :
la détermination (S12) d'une température réglée par un utilisateur et l'exécution d'un processus de refroidissement d'air ou d'un processus de chauffage d'air dans un espace intérieur (30) ;
la détermination (S 13) si un utilisateur est présent dans l'espace intérieur (30) ;
s'il est déterminé qu'aucun utilisateur n'est présent, le décompte (S15) d'un temps écoulé ; et,
si le temps écoulé atteint un temps défini, l'exécution (S17) d'un mode d'économie d'énergie de confort,
où le mode d'économie d'énergie de confort comprend un processus commandé en fonction d'une température de confort réglée déterminée de manière à maintenir dans une plage prédéfinie un vote moyen prévu, PMV, déterminé sur la base de la température, de l'humidité, de la vitesse de l'air, de la température de rayonnement moyenne, de l'isolation des vêtements, et du rythme métabolique,
**caractérisé en ce que**, lors de l'étape d'exécution d'un mode d'économie d'énergie de confort, dans le cas où le climatiseur exécute un processus de refroidissement d'air, si la température réglée par un utilisateur est inférieure à a première valeur de température (A),
la température de confort réglée est déterminée (S20) être la première valeur de température (A),
si la température réglée par un utilisateur est supérieure à la première valeur de température (A) et est inférieure à une deuxième valeur de température (B), la température de confort réglée est déterminée (S31) être la deuxième valeur de température (B), et,
si la température réglée par un utilisateur est supérieure à la deuxième valeur de température (B), le climatiseur est désactivé (S36, S37).

2. Procédé de commande selon la revendication 1, où, dans le cas où le climatiseur exécuté un processus de chauffage d'air,
si la température réglée par un utilisateur est égale ou supérieure à une troisième valeur de température (C), la température de confort réglée est déterminée (S42) être la troisième valeur de température (C),
si la température réglée par un utilisateur est inférieure à la troisième valeur de température (C) et est supérieure à une quatrième valeur de température (D), la température de confort réglée est déterminée (S52) être la quatrième valeur de température (D), et,
si la température réglée par un utilisateur est inférieure à la quatrième valeur de température (D), le climatiseur est désactivé (S57, S58).

3. Procédé de commande selon la revendication 2, où l'exécution du mode d'économie d'énergie de confort comprend l'élévation d'un niveau d'économie d'énergie du mode d'économie d'énergie de confort, de manière progressive à mesure que le temps s'écoule.

4. Procédé de commande selon la revendication 3, où l'élévation du niveau d'économie d'énergie comprend la détermination (S24) d'une élévation de la température de confort réglée, de manière progressive à mesure que le temps s'écoule si le climatiseur exécute le processus de refroidissement d'air.

5. Procédé de commande selon la revendication 3, où l'élévation du niveau d'économie d'énergie comprend la détermination (S45) d'une baisse de la température de confort réglée, de manière progressive à mesure que le temps s'écoule si le climatiseur exécute le processus de chauffage d'air.

6. Procédé de commande selon la revendication 3, où l'exécution du mode d'économie d'énergie de confort comprend la variation de la température de confort réglée en tant que premier degré si un premier temps défini est écoulé (S16) et la variation de la température de confort réglée en tant que deuxième degré si un deuxième temps défini est écoulé (S23) depuis le point temporel où le premier temps défini est écoulé, et
où le deuxième temps défini est inférieur au premier temps défini.

7. Procédé de commande selon la revendication 6, où l'exécution du mode d'économie d'énergie de confort comprend la désactivation (S28) du climatiseur si un troisième temps défini est écoulé (S27) depuis le point temporel où le deuxième temps défini est écoulé, et
où le troisième temps défini est inférieur au deuxième temps défini.

8. Procédé de commande selon la revendication 1, où la température et la température de rayonnement moyenne sont déterminées par un capteur de température (110), l'humidité est déterminée par un capteur d'humidité (112), et
la vitesse de l'air est déterminée par le nombre de rotations d'un ventilateur intérieur (160) du climatiseur.

9. Procédé de commande selon la revendication 8, où l'isolation des vêtements et le rythme métabolique sont déterminés être des valeurs définies.

10. Procédé de commande selon la revendication 1, où la température de confort réglée comprend une valeur de température prédéterminée telle qu'une valeur d'indice du PMV est comprise entre -1 et +1.

11. Climatiseur, comprenant :
une unité intérieure (20) montée dans un espace intérieur (30) et pourvue d'une section d'aspiration (22) et d'une section de refoulement (23) ;
une unité d'entrée (140) prévue pour permettre l'entrée d'une température réglée par un utilisateur de l'espace intérieur (30) ;
une unité de détection de personne (100) prévue sur un côté de l'unité intérieure (20) pour détecter si un occupant est présent dans l'espace intérieur (30) ;
une minuterie (130) prévue pour décompter un temps écoulé, s'il est détecté par l'unité de détection de personne (100) que l'occupant est absent ; et
une unité de commande (200) prévue pour déterminer une température de confort réglée ayant une valeur différente de la température réglée par un utilisateur, de manière à maintenir dans une plage définie un vote moyen prévu, PMV, si le temps écoulé décompté par la minuterie atteint un temps défini,
**caractérisé en ce que**,
dans le cas où le climatiseur exécute un processus de refroidissement d'air, l'unité de commande (200) détermine :
la température de confort réglée en tant que première valeur de température (A) si la température réglée par un utilisateur est inférieure à la première valeur de température (A),
la température de confort réglée en tant que deuxième valeur de température (B) si la température réglée par un utilisateur est supérieure à la première valeur de température (A) et est inférieure à une deuxième valeur de température (B), et
désactive le climatiseur si la température réglée par un utilisateur est supérieure à la deuxième valeur de température (B).

12. Climatiseur selon la revendication 11, comprenant en outre une unité de mémoire (120) prévue pour mémoriser des informations prédéterminées sur l'isolation des vêtements et le rythme métabolique parmi les facteurs déterminant le PMV, et
où l'unité de mémoire (120) mémorise en outre des informations d'image de référence pouvant être comparées à une image acquise par l'unité de détection de corps humain (100).

13. Climatiseur selon la revendication 11 ou la revendication 12, comprenant en outre :
un capteur de température (110) prévu pour déterminer une température parmi les facteurs déterminant le PMV ;
un capteur d'humidité (112) prévu pour déterminer une humidité parmi les facteurs déterminant le PMV ; et
un ventilateur intérieur (160) dont le nombre de rotations est détecté afin de déterminer une vitesse d'air parmi les facteurs déterminant le PMV, et
l'unité de commande (200) étant prévue pour commander un fonctionnement du climatiseur afin d'élever un niveau d'économie d'énergie par variation de la température de confort réglée, de manière progressive à mesure que le temps s'écoule.
